# EUROPÄISCHE PATENTSCHRIFT

(11) **EP 0 505 784 B1**
(45) Veröffentlichungstag und Bekanntmachung des Hinweises auf die Patenterteilung: **30.11.1994**
(21) Anmeldenummer: 92103770.1
(22) Anmeldetag: 05.03.1992
(51) Int. Cl.: A01D 82/00

(54) **Verfahren zum Konditionieren**
Method of conditioning
Procédé de conditionnement

(30) Priorität: 28.03.1991 DE 4110387
(43) Veröffentlichungstag der Anmeldung: 30.09.1992
(73) Patentinhaber: Greenland Geldrop B.V., NL-5667 KP Geldrop (NL)
(72) Erfinder: Quataert, P.M., CB Nuenen (NL); Venhuizen, Seerp, NL-5712 HM Somaren (NL)
(74) Vertreter: Grünecker, Kinkeldey, Stockmair & Schwanhäusser Anwaltssozietät

(56) Entgegenhaltungen:
- EP-A- 0 086 458
- EP-A- 0 154 128
- EP-A- 0 205 206
- US-A- 2 909 988
- US-A- 4 446 678

## Beschreibung

Die Erfindung betrifft ein Verfahren gemäß dem Oberbegriff des Patentanspruchs 1 sowie eine Vorrichtung gemäß dem Oberbegriff von Anspruch 9.

Beim Konditionieren von Erntegut wie Gras oder Luzerne zur Erzeugung von Rohfutter sollen äußere Wachsschichten bearbeitet und oberflächliche Zellwände geöffnet werden, damit Zellwasser austritt, damit das Erntegut gleichmäßig und rasch trocknet. Das Erntegut liegt gemäht üblicherweise in einem Schwad vor, in dem die Bestandteile durch das Mähen schon orientiert sein können. Im Gegensatz zu dünnen und weichen Blattanteilen sind die Stengel relativ fest. Sie enthalten eine beträchtliche Wassermenge; die Oberfläche ist relativ hart; ihre Längsstruktur ist ausgeprägt. Für einen gleichmäßigen und wirkungsvollen Konditioniereffekt benötigen besonders die Stengel eine intensive Bearbeitung, die aber ihre Längsstruktur so wenig wie möglich beseitigen soll. Theoretisch bzw. mit Laborversuchen wird dieses Ziel erreicht, wenn die Bestandteile durch den Walzenspalt zweier glatter harter Walzen gefördert werden, der dünner ist als die Stengeldicke. Dann platzen die Stengel in Längsrichtung auf, so daß Wasser über die gesamte Stengellänge austreten kann. Für die Blattanteile sind nur geringe mechanische Belastungen erforderlich, um einen ausreichenden Konditioniereffekt zu erzielen. In den Stengeln und den Blattanteilen bleibt die Längsstruktur erhalten. Diese sorgfältige Konditionierung ist jedoch auf dem Feld nicht praktisch anwendbar.

Allgemeine Informationen zum Konditionieren sind in einem Artikel von Wieneke & Dernedde in "Grundlagen der Landtechnik", Band 15 (1965) 3, 65 -70, enthalten.

Aus US-A-4 446 678, EP-A-0 154 128, EP-A-0 205 206 und US-A-2 909 988 sind verschiedene Verfahren zum Konditionieren bekannt.

Bei einem aus EP-A1-00 86 458 bekannten Verfahren werden Bürstenwalzen eingesetzt, die den Erntegutschwad mit den Spitzen der elastischen Borsten und relativ hohen Geschwindigkeiten im Durchlauf behandeln. Relativ zu den rotierenden Bürstenwalzen und ihren Borsten stationär angeordnete Kämme oder Gegenbürsten bewirken einen Spiking- und Kratzeffekt, mit dem die Blattanteile stark bearbeitet, die Stengel jedoch nicht ausreichend und schon gar nicht gleichmäßig bearbeitet werden. Gerade bei Sommergras tritt ein großer Anteil nicht ausreichend konditionierter Stengel auf, was einer raschen und gleichmäßigen Trocknung des Erntegutes abträglich ist Wird die Intensität der Behandlung gesteigert, dann wird zwar der Anteil unbeschädigter Stengel kleiner, die Längsstruktur der Blattanteile wird aber weitgehend zerstört.

Ferner ist es bekannt, den Erntegutschwad zwischen Knickwalzen durchzuführen, die nach Art von Zahnrädern ohne direkten kämmenden Eingriff gegensinnig angetrieben werden. Werden die Knickwalzen zu eng eingestellt bzw. wird ein zu dicker Schwad verarbeitet, dann wird die Längstruktur der Bestandteile, auch eines Teils der Stengel, zerstört, innenbleibende Stengel federn jedoch, und bleiben unbehandelt. Bei einem dünneren Schwad werden fast alle Stengel zu wenig bearbeitet.

Sämtlichen zur Zeit in der Praxis angewandten Verfahren ist der Nachteil zu eigen, daß die Stengel nur ungleichmäßig konditioniert werden, und daß bei intensivierter Behandlung zwar der Anteil konditionierter Stengel steigt, jedoch deren Längsstruktur zerstört wird. Die Qualität des Rohfutters wird unbefriedigend. Die Bröckelverluste sind sehr hoch. Der Energieaufwand ist unzweckmäßig hoch.

Der Erfindung liegt die Aufgabe zugrunde, ein Verfahren der eingangs genannten Art sowie eine Vorrichtung zum Durchführen des Verfahrens zu schaffen, mit denen eine gleichmäßige Konditionierung des Ernteguts, d.h. auch der Stengel, bei kurzer Trocknungszeit und hoher Qualitität des Rohfutters erreicht werden, wobei der verbesserte Konditioniereffekt unabhängig von der Schwaddicke erreicht werden soll.

Erfindungsgemäß werden nicht mehr wie bisher die Spitzen der Werkzeuge zum Konditionieren eingesetzt, sondern hauptsächlich die Flanken der Werkzeuge und deren Zwischenräume. Zunächst werden die Bestandteile im wesentlichen vereinzelt und in die Zwischenräume gebracht. Es können zwar in Längsrichtung der Werkzeuge mehrere Stengel neben oder hintereinander liegen; in Quetschrichtung liegen die Stengel aber im wesentlichen einzeln zwischen den Werkzeugen. Die Zwischenräume werden durch eine Erhöhung der Dichte der Werkzeuge verengt. Durch Verengen der Zwischenräume werden dann alle Stengel von zwei Seiten her gequetscht, bis sie in Längsrichtung mit im wesentlichen diametral gegenüberliegenden Längsrissen aufreißen. Damit werden die Stengel recht schonend aber trotzdem wirksam geöffnet. Es werden auch die Blattanteile mitbehandelt, jedoch ohne in ihrer Längsstruktur zerstört zu werden.

Die Zwischenräume werden dann wieder vergrößert und die Bestandteile werden ausgebracht.

Das fertig behandelte Erntegut ist unerwartet gleichförmig konditioniert und trocknet rasch zu qualitativ hochwertigem Rohfutter. Die Längsstruktur der Stengel wird nicht zerstört, die Bröckelverluste sind gering. Da das Quetschen während des Durchlaufes in eine Durchlaufphase erfolgt, lassen sich Schwade unterschiedlicher Stärke gleichartig verarbeiten. Es ist nur Sorge zu tragen, daß die Kapazität der zum Quetschen gebrauchten Zwischenräume für die maximale Schwadgröße reicht. Werden kleinere Schwade verarbeitet, dann hat dies auf die Gleichförmigkeit der Konditionierung keinen Einfluß, da trotzdem jeder Stengel gequetscht wird.

Mit der erfindungsgemäßen Vorrichtung nach Anspruch 9 werden zwischen den Werkzeugen die zum vereinzelten Zwischenspeichern der Stengel erforderlichen Zwischenräume geschaffen, wobei Bestandteile des Erntegutes in die Zwischenräume zwischen den Werkzeugen einbringbar sind. Die mechanische Vorrichtung erhöht dann die Dichte der Werkzeuge, bis die Längsflanken der Werkzeuge die Bestandteile des Ernteguts und vor allem die Stengel quetschen. Die erste und die zweite Dichte sind vorherbestimmbar und auf eine optimale und trotzdem schonende Konditionierung des jeweiligen Ernteguts abstimmbar.

Die bisher zum Konditionieren hauptsächlich eingesetzten freien Enden der Werkzeuge bleiben ohne nennenswerte Funktion. Allenfalls tragen Sie zum Vereinzeln der Bestandteile bei. Wenn die Werkzeuge einander angenähert werden, wird der von den Stengeln beanspruchte Raum in Bewegungsrichtung der Werkzeuge verkleinert, bis die zylindrischen Stengel flach gequetscht werden und an den Rändern des flachen Querschnitts in Längsrissen aufplatzen.

Bei einer weiteren Verfahrensform wird der Erntegutstrom oder -schwad aufgelöst, indem seine Bestandteile annähernd senkrecht zur Durchlaufrichtung in die Zwischenräume eingebracht und erst dann vereinzelt in und/oder quer zur Durchlaufrichtung zwischen den Längsseiten der Werkzeuge gequetscht werden. Die Stengel platzen mit mindestens zwei nahezu zusammenhängenden Längsrissen, so daß Wasser leicht austritt und ein selbsttätiges Schließen der Risse nicht zu befürchten ist. Da der Schwadverbund aufgelöst wird, werden die Bestandteile intensiv bearbeitet.

Bei einer weiteren Verfahrensvariante werden die Längsseiten oder Flanken der Werkzeuge zumindest einmal und vorübergehend Quetschen benutzt. Sobald die Bestandteile in die Zwischenräume gezwungen werden, sind sie weitgehend vereinzelt. Die Stengel werden wirksam gequetscht. Die Blattanteile oder Blätter werden bearbeitet, ohne in ihrer Längsstruktur zerstört zu werden.

Bei einer weiteren Verfahrensvariante werden die Werkzeuge nur in etwa mit der Stengeldicke beabstandet, um die Bestandteile einzeln in die Zwischenräume zulassen. Dann werden die Werkzeuge auf weniger als die Stengeldicke genähert, um die Stengel zu quetschen. Es erfolgt kein vollständiges Zerquetschen der Stengel oder der anderen Bestandteile des Ernteguts, sondern nur eine gewollt gesteuerte Quetschung, bei der die Längsstruktur der Stengel und Blattanteile erhalten bleiben und keine spürbaren Blattverluste mehr auftreten.

Bei einer speziellen Ausführungsform des Verfahrens, bei der das Erntegut in Form eines Schwads aufgenommen und bearbeitet wird, wird der Schwad in seine Bestandteile aufgelöst, was zu der intensiven und gezielten Einzelquetschung der Stengel führt. Die Aufnahmekapazität zwischen den Werkzeugen und/oder die Bewegungsgeschwindigkeit der Werkzeuge in Durchlaufrichtung müssen so vorherbestimmt sein, daß der Schwad aufgelöst wird. Dann läßt sich eine gleichförmige Behandlung aller Bestandteile sicherstellen.

Gegebenenfalls wird ferner bei einem Durchlauf mehr als einmal gequetscht und gegebenenfalls zwischen den Quetschungen das Erntegut aus den Zwischenräumen entnommen und erneut eingebracht. Dies kann bei bestimmten Erntegutsorten oder unter bestimmten Arbeitsbedingungen zweckmäßig sein, um die gleichmäßige Konditionierung zu erreichen. Grundsätzlich ist einer einmaligen und intensiven Quetschung der Vorzug zu geben.

Vorteilhaft ist es ferner, wenn die Erhöhung der Werkzeugdichte wie eine stehende Welle in der Durchlaufbewegung am Werkzeugträger stattfindet, oder wenn nur jeweils die Dichte bei Werkzeuggruppen verändert wird.

Bei einer zweckmäßigen Ausführungsform quetschen elastische Borsten die Stengel wirksam, während sie bei starren Hindernissen oder Fremdkörpern im Erntegut ausweichen. Ferner sind Bürstenwalzen kostengünstig und mit beliebigen Einstellungen der Borsten (Dichte, Länge, Stärke, Steifigkeit und dgl.) erhältlich. Das Gesamtvolumen der zwischen den Borsten vorhandenen Zwischenräume ist groß. Die Bürstenwalzen können - falls erforderlich - mit hoher Umfangsgeschwindigkeit angetrieben werden. Die Borsten sind verschleißfest, bruchsicher, unschädlich für Mensch und Tier, verschmutzungsunanfällig, selbstreinigend und mit beliebigen Querschnitten ausgebildet. Wichtig ist, daß die Borsten beim Erhöhen der Dichte die Stengel über eine große Borstenlänge quetschen. Ein kantenfreier Umriß der Borsten führt zu großen Quetschflächen.

Bei einer zweckmäßigen Ausführungsform sorgt eine an den freien Enden der Borsten anliegende Gegenwalze dafür, daß alle Bestandteile in die Zwischenräume gezwungen und keine Anteile direkt durchgelassen werden. Die Verdrängerelemente erhöhen mit ihrem Eintauchen zwischen die Borstengruppen die Dichte der Werkzeuge pro Flächeneinheit, was zum Quetschen der Stengel führt. Sobald die Verdrängerelemente aus der Bürstenwalze austreten, werden die Zwischenräume der Borsten der Borstengruppen wieder größer. Die Fliehkraft entfernt die bearbeiteten Erntegut-Bestandteile aus den Zwischenräumen. Es können alternativ oder additiv auch andere Maßnahmen zum Entfernen der konditionierten Erntegutbestandteile eingesetzt werden. Dabei ist mit der Form, der Dichte und dem Material oder einer beweglichen Lagerung der Verdrängerelemente an der Gegenwalze der Quetschablauf für die Stengel einstellbar.

Die erforderliche Auflösung des Schwads und das leichte Ausbringen der behandelten Bestandteile müssen dabei gewährleistet sein.

Wenn die Bürstenwalze als Pick-up-Vorrichtung dient, die den Schwad selbsttätig auflöst und später die Bestandteile durch Fliehkraft wieder abwirft, läßt sich die Vorrichtung aus wenigen Bestandteilen aufbauen.

Es ist aber auch denkbar, zusätzliche Hilfsvorrichtungen einzusetzen, um den Erntegutschwad aufzulösen und die bearbeiteten Bestandteile auch später wieder aus den Zwischenräumen zwischen den Werkzeugen herauszuholen.

Unterschiedliche Geschwindigkeiten, Durchmesser oder Drehrichtungen der kooperierenden Komponenten tragen zum Optimieren des Konditioniereffekts bei. Zweckmäßigerweise ist die Umfangsgeschwindigkeit der Werkzeuge größer als die Umfangsgeschwindigkeit der Verdrängerelemente.

Anhand der Zeichnung werden das erfindungsgemäße Verfahren und Ausführungsformen von Vorrichtungen zum Durchführen des Verfahrens erläutert. Es zeigen:
- Fig. 1a - 3b: einen perspektivischen Ausschnitt einer Vorrichtung zum Konditionieren von Erntegut, jeweils in zwei einander zugeordneten Ansichten während unterschiedlichen Verfahrensphasen,
- Fig. 4: eine Seitenansicht, teilweise im Schnitt, einer weiteren Ausführungsform einer Vorrichtung,
- Fig. 5,6,7: verschiedene Detailvarianten,
- Fig. 7a,7b: eine Detailvariante zu Fig. 7,
- Fig. 8: eine schematische Seitenansicht einer weiteren Ausführungsform,
- Fig. 8a: eine Detailvariante zu Fig. 8,
- Fig. 9: einen Schnitt einer weiteren Ausführungsform, und
- Fig. 10: eine Schnitt einer weiteren Ausführungsform.

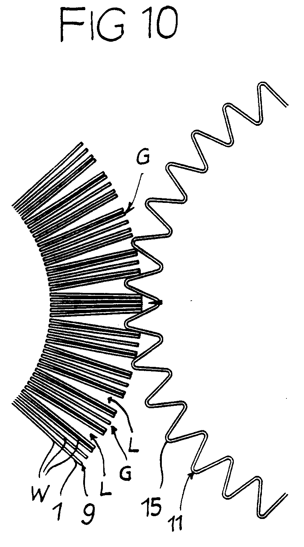

Gemäß Fig. 1a wird Erntegut E in Form eines aus Bestandteilen B zusammengesetzten Schwads S mit einer Vorrichtung V konditioniert. Von der Vorrichtung V ist nur eine Gruppe G von Werkzeugen W dargestellt, die an einem Werkzeugträger T beweglich angebracht sind, der in Richtung eines Pfeils D mit einer bestimmten Durchlaufgeschwindigkeit angetrieben wird. Jedes Werkzeug W ist als langgestreckter Stab, als Finger oder als Borste 1 mit einem Schaft 2 und einem freien Ende 3 ausgebildet. Die Werkzeuge W sind elastisch und relativ zum Werkzeugträger T und in etwa quer zu ihrer Längsrichtung beweglich. Es ist aber auch denkbar, steife Werkzeuge W beweglich oder gelenkig am Werkzeugträger T anzubringen. Gegebenenfalls sind die Werkzeuge W in nachgiebigen Halterungen einzeln oder gruppenweise (z.B. Fig. 10) festgelegt.

Zwischen den Werkzeugen W liegen Abstände a1 in zusammenhängenden Zwischenräumen Z vor. Der Querschnitt jedes Werkzeugschafts 2 kann rund, oval, kleeblattförmig oder ähnlich gewählt sein. Wichtig ist nur, daß der Umriß des Querschnitts keine scharfen und nach außen weisenden Ecken hat.

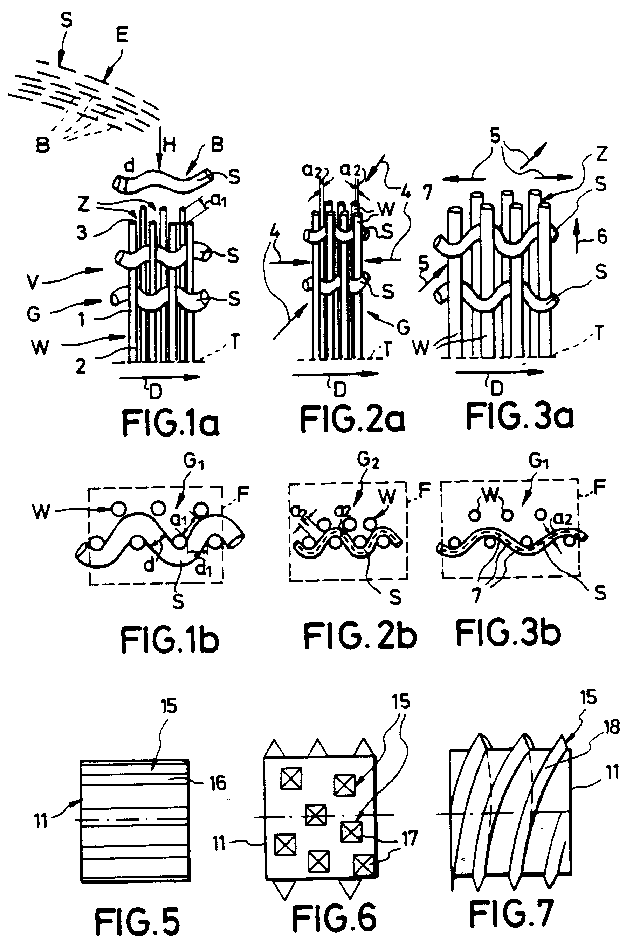

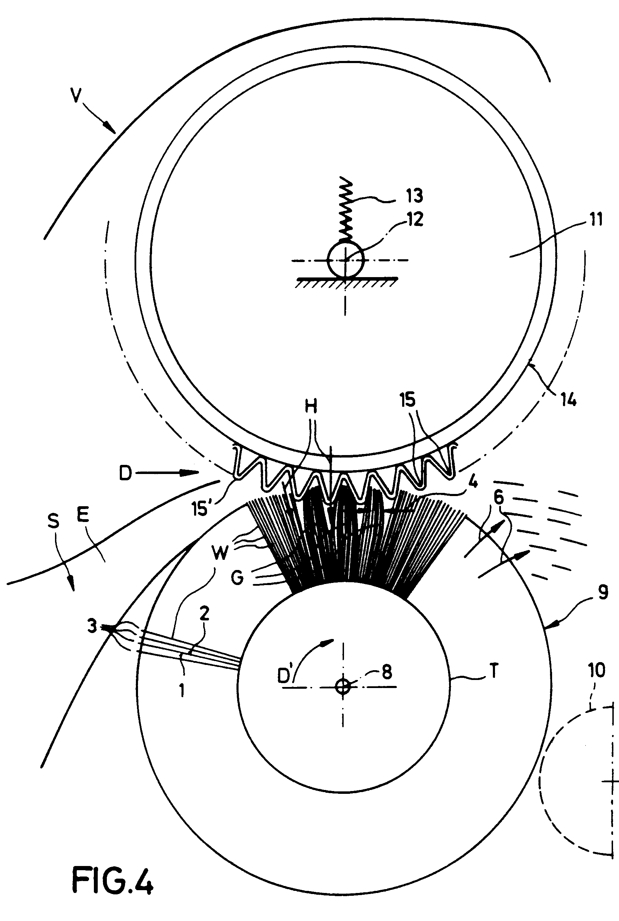

Bestandteile B des Ernteguts E sind neben Blättern oder Blattanteilen festere Stengel S mit einer bekannten Stengeldicke d. Die Querabstände a1 zwischen den Werkzeugen W sind in den Fig. 1a, 1b nur geringfügig größer als die Stengeldicke d. Es ergibt sich pro Flächeneinheit F (strichliert angedeutet) eine bestimmte Dichte G1 der Werkzeuge W.

Zum Konditionieren des Ernteguts E wird (Fig. 1a, 1b) der Schwad S in seine Bestandteile B aufgelöst. Die Bestandteile B werden in Richtung eines Pfeiles H, d.h., in Längsrichtung der Werkzeuge W, in die Zwischenräume Z eingebracht. Von den Bestandteilen B liegen Stengel S gegebenenfalls übereinander zwischen den Werkzeugen W. Quer zur Längsrichtung der Werkzeuge W sind die Stengel S jedoch vereinzelt.

Die Werkzeuge W bewegen sich fortwährend in Richtung des Pfeils D. Die Stengel S müssen sich nicht notwendigerweise wie in den Fig. 1a und 1b angedeutet, um die Werkzeuge W schlängeln. Sie liegen auch gerade oder sogar geknickt oder schräg in den Zwischenräumen Z.

Bei der weiteren Bewegung der Vorrichtung V wird im Verfahren die Dichte G1 der Werkzeuge W gemäß Fig. 2a, 2b auf ein Maß G2 erhöht, bei dem die Abstände a2 zwischen den Werkzeugen W kleiner sind als die Stengeldicke d. Dazu bewegen sich gemäß Fig. 2a die Werkzeuge W in Richtung von Pfeilen 4 aufeinander zu, und zwar in etwa parallel zur Durchlaufrichtung D. Die Erhöhung der Dichte kann auch durch eine Bewegung der Werkzeuge in nur einer Richtung, z.B. in Richtung des linken Pfeiles 4 in Fig. 2a, erfolgen. Zweckmäßigerweise bewegen sich aber die Werkzeuge W von allen Seiten aufeinander zu. Die Zwischenräume Z verengen sich, wobei die Stengel S über ihre Länge gequetscht werden. Jeder Stengel kann in Fig. 2a nur nach oben oder unten ausweichen, so daß er flachgedrückt wird und wenigstens in zwei gegenüberliegenden Längsrissen 7 (Fig. 3b, 3a) aufplatzt. Während des Quetschens bewegt sich die Werkzeuggruppe G mit der Durchlaufgeschwindigkeit in Richtung des Pfeils D weiter.

Im weiteren Ablauf wird die Dichte wieder verringert (Fig. 3a, 3b), indem die Werkzeuge W in Richtung von Pfeilen 5 voneinander wegbewegt werden. Die Zwischenräume Z entstehen wieder in der ursprünglichen oder sogar einer größeren Größe. In Richtung eines Pfeiles 6 wirkt eine Kraft, z.B. Fliehkraft bei einer Drehbewegung, auf die gequetschten Stengel S und die Bestandteile, um sie aus den Zwischenräumen Z zu lösen.

Wenn die Bewegung der Werkzeuggruppe G kreisförmig ist, sind die Werkzeuge W sofort wieder zur Aufnahme neuer Bestandteile bereit. Es wäre aber auch denkbar, die Dichte der gleichen Werkzeuggruppe mehrmals zu erhöhen und dazwischen die Lagen der Bestandteile in den Zwischenräumen zu verändern. Es könnten auch andere Werkzeuggruppen gebildet und könnte das Erntegut zwischenzeitlich von einer Gruppe zu einer anderen Gruppe gebracht werden.

Gemäß Fig. 4 ist eine solche Vorrichtung V als fahrbare Landmaschine mit Rädern 10 ausgestattet und an ein Schleppfahrzeug anhängbar, bzw. in eine Mähmaschine hinter die Mähwerkzeuge eingliederbar. Die Werkzeuge W sind Borsten 1 einer Bürstenwalze 9, die um eine Achse 8 in Richtung des Pfeiles D angetrieben wird. Die Borsten 1 sind relativ steif. Ihre freien Enden 3 definieren einen Zylinder. Die Dichte der Borsten 1 ist so gewählt, daß zwischen ihnen Zwischenräume vorhanden sind. Die Bürstenwalze 9 dient in der Vorrichtung, z.B. als Pick-up-Walze, die den Schwad S vom Boden aufnimmt oder direkt von einem Mähwerk übernimmt. Mit der Bürstenwalze 9 arbeitet eine Gegenwalze 11 zusammen, die um eine Achse 12 gegenläufig zur Bürstenwalze 9 angetrieben wird. Eine Feder 13 drückt die Gegenwalze 11 nach unten, so daß sie ggfs. mit ihrer Oberfläche 14 auf den freien Enden 3 der Borsten 1 aufsteht. Die Gegenwalze 11 kann bei Überdruck nach oben nachgeben. Die Gegenwalze 11 kann aber auch fest eingebaut sein.

Auf der Gegenwalze 11 sind auf deren Oberfläche 14 in Umfangsrichtung verteilte Verdrängerelemente 15 angeordnet. Bei der Durchlaufbewegung D werden die Bestandteile B des Schwads S in die Zwischenräume zwischen die Borsten 1 eingebracht, ehe die Verdrängerelemente 15 zwischen Borstengruppen G eintauchen und jede Borstengruppe G in Richtung der Pfeile 4 (s. Fig. 2a) so verformen, daß die Dichte erhöht und die Bestandteile, insbesondere die Stengel S, zwischen den Borsten gequetscht werden. Mit Fliehkraft werden die gequetschten Bestandteile, nach dem zuvor die Verdrängerelemente 15 ausgetreten sind, in Richtung der Pfeile 6 ausgeworfen. Die Oberfläche 14 der Gegenwalze 11 könnte zwischen den Verdrängerelementen 15 unterbrochen sein.

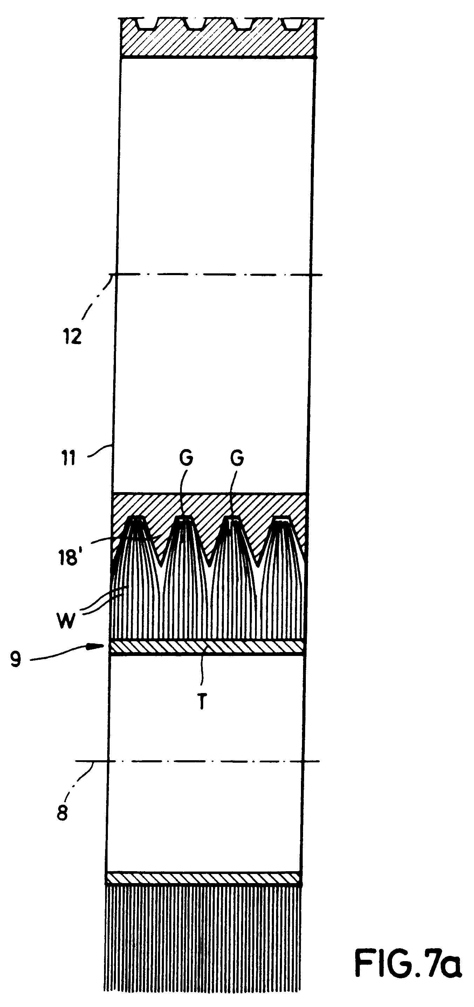

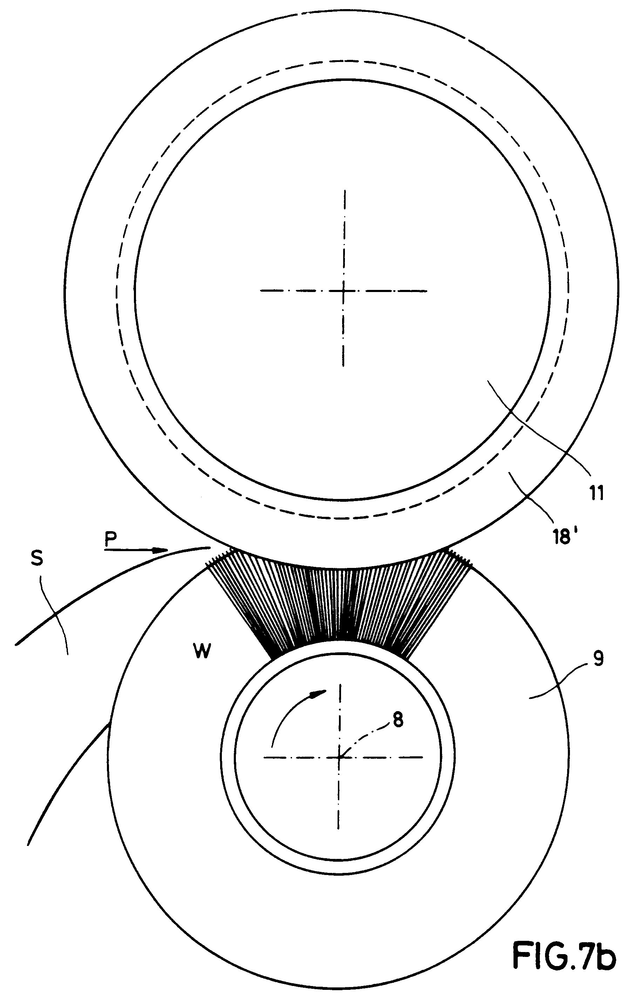

Die Verdrängerelemente 15 können gemäß Fig. 5 längsdurchgehende Rippen 16, Stege oder Rohre sein. Gemäß Fig. 6 können es auch vereinzelt stehende Pyramiden, Stifte oder kuppenförmige Vorsprünge 17 sein. Denkbar ist ferner, gemäß Fig. 7, gewindegangartige Rippen oder Stege 18 als Verdrängerelemente 15 zu benutzen. Die Umfangsgeschwindigkeit der Gegenwalze 11 kann gleich der Umfangsgeschwindigkeit der Bürstenwalze 9 sein. Es ist aber auch denkbar, mit einem Geschwindigkeitsunterschied der beiden Walzen zu arbeiten. Die Drehrichtungen könnten auch gleichsinnig sein. Die Bürstenwalze 9 kann unerschlächtig oder oberschlächtig arbeiten, bzw. unten oder oben angeordnet sein. Die Verteilung der Verdrängerelemente 15 kann in Umfangsrichtung unregelmäßig sein. Denkbar ist es ferner, der Bürstenwalze 9 mehr als eine Gegenwalze 11 zuzuordnen oder einlaufseitig eine Auflösewalze vorzusehen, die das Auflösen des Schwads in seine Bestandteile und das Einbringen der Bestandteile in die Zwischenräume zwischen die Borsten unterstützt.

Bei der Ausführungsform der Fig. 7a, 7b sind die Verdrängerelemente in etwa in Umfangsrichtung umlaufende Rippen 18'. In etwa soll heißen, daß sie entweder exakt in Umlaufrichtung und parallel zueinander verlaufen, oder daß sie wellenförmige oder schräggesteuerte, aber zusammenhängende Rippen 18' sind.

Bei der Ausführungsform von Fig. 10 sind zwischen in Umfangsrichtung regelmäßig aufeinanderfolgenden Gruppen G der Werkzeuge W (Borsten 1 oder Bürstenwalze 9) vorgeformte keilartige Lücken L vorgesehen, auf die die Verdrängerelemente 15 der Gegenwalze 11 ausgerichtet sind. Damit werden der Borstenverschleiß und die notwendige Antriebsleitung verringert. Das Erntegut wird zuerst gegen die Bürstenwalze 9 und in die Zwischenräume zwischen den Borsten 1 gedrückt und erst dann gequetscht.

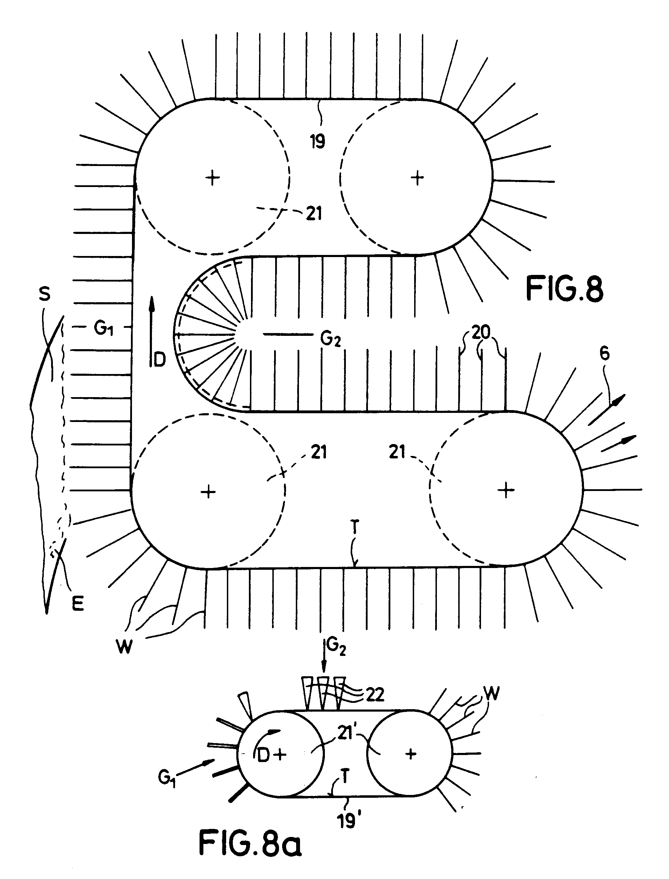

Bei der Ausführungsform gemäß Fig. 8 ist als Werkzeugträger T für Werkzeuge W ein förderbandartiges Elemente 19 vorgesehen. Die Werkzeuge W sind starre Zinken oder Stäbe oder Finger 20, die mit einer vorbestimmten Dichte und annähernd zueinander parallel angeordnet sind. Führungselemente 21 dienen zum Führen des Förderbandes 19. Das Erntegut E wird als Schwad S dort zugeführt, wo die Werkzeuge W in einer niedrigen Dichte G1 stehen, so daß die Bestandteile B in die Zwischenräume gelangen. In dem z.B. in Gegenrichtung umgelenkten Bereich des Förderbandes 19 werden bei höherer Dichte G2 die Bestandteile des Ernteguts E gequetscht, um dann später (Pfeil 6), ausgeworfen oder entfernt zu werden.

Gemäß Fig. 8a dient ein auf Umlenkrollen 21 laufendes Förderband 19' als Werkzeugträger T. Die Werkzeuge W sind, z.B. nach außen dicker werdende, Stäbe oder Finger am Förderband 19'. Im Bereich der niedrigeren Dichte G1 werden die Bestandteile in die Zwischenräume eingebracht. Im oberen horizontalen Trum des mit der Durchlaufgeschwindigkeit D angetriebenen Förderbands 19' wird die Dichte auf G2 erhöht und werden die Bestandteile gequetscht, ehe sie unter Vergrößerung der Zwischenräume wieder ausgeworfen werden.

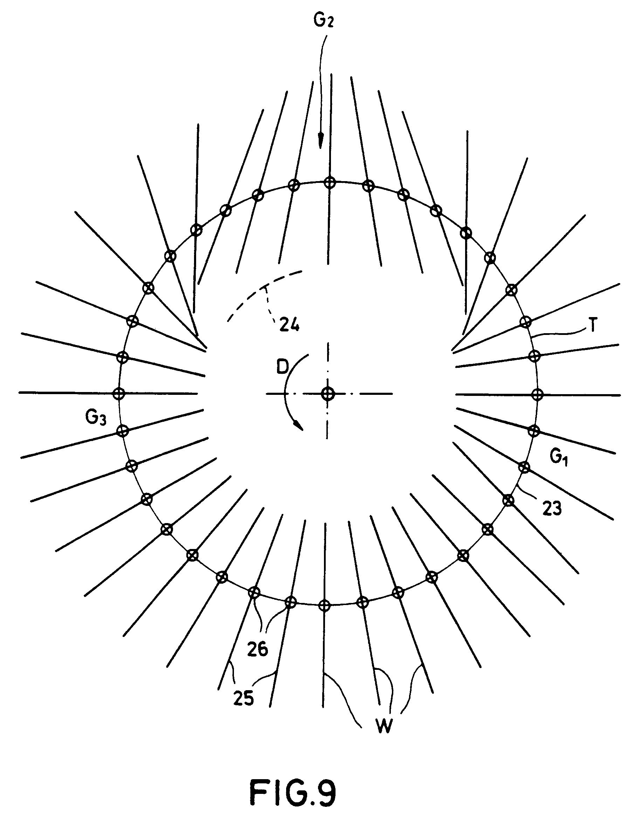

Bei der Ausführungsform gemäß Fig. 9 ist der Werkzeugträger zylindrisch und mit der Durchlaufgeschwindigkeit D angetrieben. Die Werkzeuge sind Finger oder starre Zinken 25, die in Gelenkstellen 26 am als Zylinder 23 ausgebildeten Werkzeugträger T schwenkbar gelagert sind. Eine nicht näher hervorgehobene mechanische Steuervorrichtung 24 steuert die Zinken 25 bei jedem Umlauf des Werkzeugträgers T derart, daß sie über einen Teil des Umfangs mit einer niedrigen Dichte G1 vorliegen, danach auf eine höhere Dichte G2 gebracht werden und die eingebrachten Bestandteile quetschen, ehe sie wieder auf eine niedrige Dichte G3 gesteuert werden und das gequetschte Erntegut auswerfen.

## Patentansprüche

1. Verfahren zum Konditionieren von Stengel enthaltendem Erntegut wie Gras oder Luzerne, bei dem das Erntegut mit beweglichen Werkzeugen wenigstens eines angetriebenen Werkzeugträgers im Durchlauf bearbeitet wird, **dadurch gekennzeichnet,** daß die Bestandteile des Ernteguts im wesentlichen vereinzelt in Zwischenräume zwischen die Werkzeuge desselben Werkzeugträgers eingebracht werden, daß von den Bestandteilen zumindest die Stengel durch die Werkzeuge gequetscht werden, wobei die Dichte der Werkzeuge unter Verengen ihrer Zwischenräume erhöht wird, und daß die Zwischenräume wieder vergrößert und die Bestandteile ausgebracht werden.

2. Verfahren nach Anspruch 1, **dadurch gekennzeichnet,** daß die Bestandteile annähernd senkrecht zur Durchlaufrichtung in die Zwischenräume eingebracht werden, und daß zumindest die Stengel in und/oder quer zur Durchlaufrichtung zwischen den Längsseiten der Werkzeuge gequetscht werden.

3. Verfahren nach den Ansprüchen 1 und 2, **dadurch gekennzeichnet,** daß die Werkzeuge langgestreckt, stab-, finger- oder borstenartig ausgebildet und annähernd parallel zueinander und beim Einbringen der Bestandteile mit einer in Abhängigkeit von der Stengeldicke der Bestandteile vorbestimmten Dichte beweglich angeordnet sind, und daß die Dichte der Werkzeuge durch gegenseitiges Annähern und Entfernen benachbarter Werkzeuge quer zu deren Längsrichtung während des Durchlaufs zumindest einmal erhöht und wieder verringert wird.

4. Verfahren nach Anspruch 3, **dadurch gekennzeichnet,** daß die Werkzeuge für die vorbestimmte Dichte voneinander in etwa mit der Stengeldicke beabstandet werden, und daß zum Quetschen zumindest der Stengel die Querabstände benachbarter Werkzeuge bis auf weniger als die Stengeldicke verringert werden.

5. Verfahren nach den Ansprüchen 1 bis 4, wobei das Erntegut in Form eines Schwades aufgenommen und im Durchlauf bearbeitet wird, **dadurch gekennzeichnet,** daß der Schwad durch Einbringen seiner Bestandteile in die Zwischenräume zwischen die Werkzeuge desselben Werkzeugträgers aufgelöst wird, daß zumindest die Stengel unter den Bestandteilen im wesentlichen vereinzelt durch Verkleinern der Zwischenräume zwischen den Werkzeugen gequetscht werden, und daß anschließend die Bestandteile nach Vergrößern der Zwischenräume ausgebracht werden.

6. Verfahren nach einem der Ansprüche 1 bis 5, **dadurch gekennzeichnet,** daß die Bestandteile des Ernteguts bei einem Durchlauf mehr als einmal gequetscht und gegebenenfalls zwischen den Quetschungen aus- und wieder neu eingebracht werden.

7. Verfahren nach einem der Ansprüche 1 bis 6, **dadurch gekennzeichnet,** daß die Werkzeugdichte im Durchlauf kontinuierlich erhöht und erniedrigt wird.

8. Verfahren nach einem der Ansprüche 1 bis 6, **dadurch gekennzeichnet,** daß jeweils die Werkzeugdichte in Werkzeuggruppen erhöht und erniedrigt wird.

9. Vorrichtung zum Konditionieren von stengelhaltigem Erntegut wie Gras oder Luzerne, mit wenigstens einem Werkzeuge tragenden, zu einer Durchlaufbewegung für das Erntegut angetriebenen Werkzeugträger, der das Erntegut mit den Werkzeugen im Durchlauf bearbeitet, wobei die Werkzeuge (W) langgestreckt und stab-, finger- oder borstenförmig ausgebildet und am Werkzeugträger (T) mit Zwischenräumen (Z) in einer vorbestimmten Dichte (G1) und in etwa parallel zueinander angeordnet sind, **dadurch gekennzeichnet,** daß bei der zwischen benachbarten Werkzeugen (W) Querabstände (Q1) in mindestens der Stengeldicke (d) vorliegen, wobei Bestandteile (B) des Erntegutes (E) in die Zwischenräume (Z) zwischen den Werkzeugen (W) einbringbar sind, und daß eine mechanische Vorrichtung (V) zum zumindest vorübergehenden Erhöhen der Dichte der Werkzeuge (W) durch Bewegen quer zu deren Längsrichtung vorgesehen ist, um die Querabstände (Q2) bis unter die Stengeldicke (d) zu verringern.

10. Vorrichtung nach Anspruch 9, **dadurch gekennzeichnet,** daß die Werkzeuge (W) in etwa so dick wie die Stengel (S) des Ernteguts (E) sind.

11. Vorrichtung nach Anspruch 9, **dadurch gekennzeichnet,** daß die Werkzeuge (W) elastische Borsten (1) einer Bürstenwalze (9) sind.

12. Vorrichtung nach den Ansprüchen 9 bis 11, **dadurch gekennzeichnet,** daß die Biegesteifigkeit der Werkzeuge (W) (Borsten) höher als der Quetschwiderstand der Stengel (S) ist.

13. Vorrichtung nach den Ansprüchen 9 bis 12, **dadurch gekennzeichnet,** daß der Querschnitt der Werkzeuge (W) (Borsten) einen kantenfreien Umriß aufweist.

14. Vorrichtung (V) nach Anspruch 11, **dadurch gekennzeichnet,** daß an der Bürstenwalze (9) wenigstens eine mitlaufende Gegenwalze (11) vorgesehen ist, deren Oberfläche (14) im Walzenspalt in etwa auf den freien Borstenenden (3) aufliegt, und daß die Gegenwalze (11) vorstehende Verdrängerelemente (15) aufweist, die zwischen Gruppen (G) der Borsten (1) der Bürstenwalze (9) eintauchen und die Dichte der Borsten in jeder Gruppe zumindest vorübergehend erhöhen.

15. Vorrichtung nach Anspruch 14, **dadurch gekennzeichnet,** daß die Verdrängerelemente (15) Zähne, Rippen, Kämme, Stege, Gewindegänge, Vorsprünge oder dgl. der Gegenwalze (11) sind, die gegebenenfalls beweglich an der Gegenwalze (11) angeordnet sind.

16. Vorrichtung nach den Ansprüchen 9 bis 15, **dadurch gekennzeichnet,** daß die Umfangsgeschwindigkeit der freien Borstenenden (3) erheblich höher als die Zuführgeschwindigkeit des Ernteguts (E) bzw. die Betriebsfahrgeschwindigkeit der Vorrichtung (V) ist.

17. Vorrichtung nach Anspruch 11, **dadurch gekennzeichnet,** daß die Bürstenwalze (9) als Pick-up-Vorrichtung (V) und als Schwadauflösevorrichtung dient, und daß die konditionierten Bestandteile (B) des Ernteguts durch Fliehkraftauswurf aus den Zwischenräumen ausbringbar sind.

18. Vorrichtung nach Anspruch 14, **dadurch gekennzeichnet,** daß in Drehrichtung (D) der Bürstenwalze (9) vor der Gegenwalze (11) wenigstens eine Schwadauflösevorrichtung, z.B. eine Auflösewalze, vorgesehen ist, mit der die Erntegutbestandteile in die Zwischenräume (Z) zwischen die Borsten (1) der Bürstenwalze (9) einbringbar sind.

19. Vorrichtung nach einem der Ansprüche 9 bis 18, **dadurch gekennzeichnet,** daß die Umfangsgeschwindigkeiten der Bürstenwalze (9) und der Gegenwalze (11) verschieden sind, vorzugsweise daß die Umfangsgeschwindigkeit der Bürstenwalze (9) größer ist als die Umfangsgeschwindigkeit der Gegenwalze (11).

20. Vorrichtung nach einem der Ansprüche 9 bis 19, **dadurch gekennzeichnet,** daß die Bürstenwalze (9) und die Gegenwalze (11) im gegenseitigen Eingriffsbereich gleichsinnig oder gegensinnig laufen.

21. Vorrichtung nach einem der Ansprüche 9 bis 20, **dadurch gekennzeichnet,** daß die Außendurchmesser von Bürstenwalze (9) und Gegenwalze (11) verschieden sind.

22. Vorrichtung nach einem der Ansprüche 11 und 14, **dadurch gekennzeichnet,** daß an der Bürstenwalze (9) in Umfangsrichtung durch vorgeformte Lücken (L) beabstandete Borstengruppen (G) vorgesehen sind, und daß die Verdrängerelemente (15) der Gegenwalze (11) auf die Lücken (L) ausgerichtet sind.

## Claims

1. Method of treating harvested material, such as grass or lucerne, which contains stalks, wherein the harvested material is processed in transit by displaceable tools of at least one driven tool holder, characterised in that the component parts of the harvested material are introduced substantially individually into intermediate spaces between the tools of the same tool holder, in that at least the stalks of the component parts are squeezed by the tools, the density of the tools being increased as a result of their intermediate spaces being narrowed, and in that the intermediate spaces are enlarged again, and the component parts are discharged.

2. Method according to claim 1, characterised in that the components parts are introduced into the intermediate spaces approximately perpendicularly relative to the transit direction, and in that at least the stalks are squeezed between the longitudinal sides of the tools in and/or transversely relative to the transit direction.

3. Method according to claims 1 and 2, characterised in that the tools have an elongate, rod-like, finger-like or bristle-like configuration and are disposed so as to be displaceable approximately parallel to one another and, upon the component parts being introduced, with a density predetermined in dependence on the stalk thickness of the component parts, and in that the density of the tools is increased at least once and decreased again as a result of adjacent tools being moved towards and away from one another transversely relative to their longitudinal direction during transit.

4. Method according to claim 3, characterised in that the tools for the predetermined density are spaced apart from one another at a distance substantially corresponding to the stalk thickness, and in that, in order to squeeze at least the stalks, the transverse spacings between adjacent tools are reduced to being less than the stalk thickness.

5. Method according to claims 1 to 4, the harvested material being picked-up in the form of a swath and being processed in transit, characterised in that the swath is released by introducing its component parts into the intermediate spaces between the tools of the same tool holder, in that at least the stalks of the component parts are squeezed substantially individually by reducing the intermediate spaces between the tools, and in that the component parts are subsequently discharged after the intermediate spaces have been enlarged.

6. Method according to one of claims 1 to 5, characterised in that the component parts of the harvested material are squeezed more than once during one transit and, if necessary, are removed and re-introduced between the squeezing operations.

7. Method according to one of claims 1 to 6, characterised in that the tool density is continuously increased and decreased during transit.

8. Method according to one of claims 1 to 6, characterised in that the tool density is respectively increased and decreased in tool groups.

9. Device for treating stalk-containing harvested material such as grass or lucerne, having at least one tool holder, which carries tools, is driven to effect a transit movement for the harvested material and processes the harvested material in transit with the tools, the tools (W) having an elongate and rod-like, finger-like or bristle-like configuration and being disposed on the tool holder (T) with intermediate spaces (Z) in a predetermined density (G1) and substantially parallel to one another, characterised in that transverse spacings (Q1) between adjacent tools (W) are provided of at least the stalk thickness (d), component parts (B) of the harvested material (E) being insertable into the intermediate spaces (Z) between the tools (W), and in that a mechanical device (V) is provided for increasing the density of the tools (W), at least temporarily, by displacement transversely relative to their longitudinal direction in order to reduce the transverse spacings (Q2) to below the stalk thickness (d).

10. Device according to claim 9, characterised in that the tools (W) are substantially as thick as the stalks (S) of the harvested material (E).

11. Device according to claim 9, characterised in that the tools (W) are resilient bristles (1) of a brush roller (9).

12. Device according to claims 9 to 11, characterised in that the resistance to bending of the tools (W) (bristles) is higher than the resistance to squeezing of the stalks (S).

13. Device according to claims 9 to 12, characterised in that the cross-section of the tools (W) (bristles) has a non-angular configuration.

14. Device (V) according to claim 11, characterised in that at least one following counter-roller (11) is provided on the brush roller (9), the surface (14) of said counter-roller in the roller nip resting substantially on the free bristle ends (3), and in that the counter-roller (11) has protruding displacement means (15), which extend between groups (G) of the bristles (1) of the brush roller (9) and increase, at least temporarily, the density of the bristles in each group.

15. Device according to claim 14, characterised in that the displacement means (15) are teeth, ribs, combs, webs, threaded pitches, projections or the like of the counter-roller (11) and are possibly disposed in a displaceable manner on the counter-roller (11).

16. Device according to claims 9 to 15, characterised in that the circumferential speed of the free bristle ends (3) is considerably higher than the delivery speed of the harvested material (E) or respectively the operational speed of the device (V).

17. Device according to claim 11, characterised in that the brush roller (9) serves as a pick-up device (V) and as a swath releasing device, and in that the treated component parts (B) of the harvested material can be discharged from the intermediate spaces by centrifugal ejection.

18. Device according to claim 14, characterised in that, when viewed with respect to the direction of rotation (D) of the brush roller (9), at least one swath releasing device, e.g. a releasing roller, is provided upstream of the counter-roller (11), and the component parts of the harvested material can be introduced into the intermediate spaces (Z) between the bristles (1) of the brush roller (9) by said releasing device.

19. Device according to one of claims 9 to 18, characterised in that the circumferential speeds of the brush roller (9) and the counter-roller (11) are different, preferably in that the circumferential speed of the brush roller (9) is greater than the circumferential speed of the counter-roller (11).

20. Device according to one of claims 9 to 19, characterised in that the brush roller (9) and the counter-roller (11) travel in identical directions or in opposite directions in the mutual region of engagement.

21. Device according to one of claims 9 to 20, characterised in that the external diameters of the brush roller (9) and counter-roller (11) are different.

22. Device according to one of claims 11 and 14, characterised in that bristle groups (G) are provided on the brush roller (9) so as to be spaced apart by preformed gaps (L) when viewed with respect to the circumferential direction, and in that the displacement means (15) of the counter-roller (11) are orientated towards the gaps (L).

## Revendications

1. Procédé de conditionnement de produits récoltés contenant des tiges tels que l'herbe ou la luzerne, dans lequel les produits récoltés sont traités par un passage en machine par des outils mobiles au moins d'un porte-outils mené, caractérisé en ce que les parties constituantes des produits récoltés sont insérées essentiellement individuellement dans les espaces intermédiaires entre les outils du même porte-outils, que parmi ces parties constituantes, au moins les tiges sont écrasées par les outils, la densité des outils étant augmentée en diminuant les espaces intermédiaires entre ceux-ci, et en ce que les espaces intermédiaires sont de nouveau agrandis et les parties constituantes sont évacuées.

2. Procédé selon la revendication 1, caractérisé en ce que les parties constitutives sont introduites à peu près perpendiculairement à la direction du passage dans les espaces intermédiaires, et en ce qu'au moins les tiges sont écrasées suivant et/ou transversalement à la direction de passage entre les côtés longitudinaux des outils.

3. Procédé selon les revendications 1 et 2, caractérisé en ce que les outils sont réalisés de façon à avoir une forme allongée, de bâton, de doigt ou de brosse et sont disposés mobiles à peu près parallèlement les uns aux autres et lors de l'introduction des parties constitutives en une densité prédéfinie en fonction de l'épaisseur de tige des parties constitutives et en ce que la densité des outils, par un rapprochement et éloignement mutuel d'outils avoisinants, transversalement à la direction longitudinale de ceux-ci, sera augmentée et ensuite diminuée au moins une fois pendant le passage.

4. Procédé selon la revendication 3, caractérisé en ce que les outils en vue de la densité prédéfinie, sont espacés à peu près selon l'épaisseur de la tige. et que pour l'écrasement au moins des tiges, les espacements transversaux d'outils avoisinants sont diminués jusqu'à ce qu'ils soient inférieurs à l'épaisseur de la tige.

5. Procédé selon les revendications 1 à 4, dans lequel les produits récoltés sont reçus sous forme d'andain et sont traités par un passage en machine, caractérisé en ce que l'andain, par introduction de ses parties constitutives dans les espaces intermédiaires entre les outils du même porte-outils est dissous, qu'au moins les tiges parmi les parties constitutives sont écrasées sensiblement individuellement par une diminution des espaces intermédiaires entre les outils, et qu'ensuite les parties constitutives après l'agrandissement des espaces intermédiaires, sont évacuées.

6. Procédé selon l'une des revendications 1 à 5, caractérisé en ce que les parties constitutives des produits récoltés, lors d'un passage, sont écrasées plus d'une fois et sont, le cas échéant, sorties et introduites de nouveau entre les écrasements.

7. Procédé selon l'une des revendications 1 à 6, caractérisé en ce que la densité des outils lors du passage est augmentée et diminuée continuellement.

8. Procédé selon l'une des revendications 1 à 6, caractérisé en ce que la densité des outils respectivement dans des groupes d'outils est augmentée et diminuée.

9. Dispositif de conditionnement de produits récoltés contenant des tiges, tels que l'herbe ou la luzerne, avec au moins un porte-outils supportant les outils, entraîné en vue d'un mouvement de passage des produits récoltés, et qui traite lors d'un passage les produits récoltés avec les outils, les outils (W) étant réalisés pour avoir une forme allongée et de bâton, de doigt ou de brosse et sont disposés au porte-outils (T) avec des espaces intermédiaires (Z) suivant une densité prédéfinie (G1) et à peu près parallèlement les uns aux autres, caractérisé en ce que sont prévus entre des outils avoisinants (W) des espacements transversaux (Q1) correspondant au moins à l'épaisseur de tige (d), des parties constitutives (B) des produits récoltés (E) pouvant être introduites dans les espaces intermédiaires (Z) entre les outils (W), et en ce qu'il est prévu un dispositif mécanique (V) pour augmenter au moins temporairement la densité des outils (W) par un déplacement transversalement à la direction longitudinale de ceux-ci afin de diminuer les espacements transversaux (Q2) jusqu'à ce qu'ils soient inférieurs à l'épaisseur de tige (d).

10. Dispositif selon la revendication 9, caractérisé en ce que les outils (W) ont à peu près l'épaisseur des tiges (S) des produits récoltés (E).

11. Dispositif selon la revendication 9, caractérisé en ce que les outils (W) sont des brosses élastiques (1) d'un rouleau à brosses (9).

12. Dispositif selon les revendications 9 à 11, caractérisé en ce que la rigidité en flexion des outils (W) (brosses) est supérieure à la résistance à l'écrasement des tiges (S).

13. Dispositif selon les revendications 9 à 12, caractérisé en ce que la coupe transversale des outils (W) (brosses) présente un contour exempt d'arêtes.

14. Dispositif (V) selon la revendication 11, caractérisé en ce qu'il est prévu au rouleau à brosses (9) au moins un contre-rouleau co-rotatif (11) dont la surface (14) dans la fente entre les rouleaux repose à peu près sur les extrémités libres (3) de la brosse, et en ce que le contre-rouleau (11) présente des éléments de refoulement en saillie (15) qui plongent entre des groupes (G) des brosses (1) du rouleau à brosses (9) et augmentent au moins temporairement la densité des brosses dans chaque groupe.

15. Dispositif selon la revendication 14, caractérisé en ce que les éléments de refoulement (15) sont des dents, des nervures, des peignes, des barrettes, des pas filetés, des saillies ou analogues du contre-rouleau (11) qui sont disposés, le cas échéant, de façon mobile au contre-rouleau (11).

16. Dispositif selon les revendications 9 à 15, caractérisé en ce que la vitesse périphérique des extrémités libres (3) de brosse est bien plus élevée que la vitesse d'amenée des produits récoltés (E) ou la vitesse de fonctionnement du dispositif (V).

17. Dispositif selon la revendication 11, caractérisé en ce que le rouleau à brosses (9) sert de dispositif de ramassage (V) et de dispositif de dissolution d'andain, et en ce que les parties constitutives conditionnées (B) des produits récoltés peuvent être évacuées par éjection par force centrifuge des espaces intermédiaires.

18. Dispositif selon la revendication 14, caractérisé en ce qu'il est prévu dans le sens de rotation (D) du rouleau à brosses (9) devant le contre-rouleau (11) au moins un dispositif de dissolution d'andain, par exemple un rouleau de dissolution au moyen duquel les parties constitutives des produits récoltés peuvent être introduites dans les espaces intermédiaires (Z) entre les brosses (1) du rouleau à brosses (9).

19. Dispositif selon l'une des revendications 9 à 18, caractérisé en ce que les vitesses périphériques du rouleau à brosses (9) et du contre-rouleau (11), sont différentes,de préférence que la vitesse périphérique du rouleau à brosses (9) est supérieure à la vitesse périphérique du contre-rouleau (11).

20. Dispositif selon l'une des revendications 9 à 19, caractérisé en ce que le rouleau à brosses (9) et le contre-rouleau (11) dans la zone d'intervention mutuelle tournent dans le même sens ou en sens contraire.

21. Dispositif selon l'une des revendications 9 à 20, caractérisé en ce que les diamètres externes du rouleau à brosses (9) et du contre-rouleau (11) sont différents.

22. Dispositif selon l'une des revendications 11 et 14, caractérisé en ce que des groupes de brosses (G) espacés par des brèches préformées (L) sont prévus au rouleau à brosses (9) dans le sens périphérique, et que les éléments de refoulement (15) du contre-rouleau (11) sont orientés vers les brèches (L).
